(19) Europäisches Patentamt / European Patent Office / Office européen des brevets

(11) EP 4 693 447 A1

(12) **EUROPEAN PATENT APPLICATION**
published in accordance with Art. 153(4) EPC

(43) Date of publication:
**11.02.2026 Bulletin 2026/07**

(21) Application number: **24784773.4**

(22) Date of filing: **25.03.2024**

(51) International Patent Classification (IPC):
***H01M 4/134** (2010.01)* ***H01M 4/133** (2010.01)*
***H01M 4/36** (2006.01)* ***H01M 4/38** (2006.01)*
***H01M 4/587** (2010.01)* ***H01M 4/62** (2006.01)*

(52) Cooperative Patent Classification (CPC):
Y02E 60/10

(86) International application number:
**PCT/JP2024/011684**

(87) International publication number:
**WO 2024/209982 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 JP 2023059748**

(71) Applicant: **Panasonic Intellectual Property Management Co., Ltd.**
**Kadoma-shi, Osaka 571-0057 (JP)**

(72) Inventors:
- **SOGA, Masahiro**
  **Kadoma-shi, Osaka 571-0057 (JP)**
- **SATO, Shin**
  **Kadoma-shi, Osaka 571-0057 (JP)**

(74) Representative: **Novagraaf International SA**
**Chemin de l'Echo 3**
**1213 Onex, Geneva (CH)**

# (54) NEGATIVE ELECTRODE FOR NONAQUEOUS ELECTROLYTE SECONDARY BATTERY, AND NONAQUEOUS ELECTROLYTE SECONDARY BATTERY

(57) A negative electrode (12) for a nonaqueous electrolyte secondary battery according to one embodiment of the present disclosure comprises a negative electrode core body (30), a first negative electrode mixture layer (31), and a second negative electrode mixture layer (32) disposed between the first negative electrode mixture layer (31) and the negative electrode core body (30), the negative electrode being characterized in that: the first negative electrode mixture layer (31) and the second negative electrode mixture layer (32) contain, as a negative electrode active material, a carbon material and a silicon-containing material; the silicon-containing material has silicon-containing particles and a coating layer that covers at least a portion of the surfaces of the silicon-containing particles; the coating layer contains a sulfonic acid compound and a hydrophobic polymer compound; and the porosity (ε1) of the first negative electrode mixture layer (31) and the porosity (ε2) of the second negative electrode mixture layer (32) satisfy ε1>ε2.

Figure 2

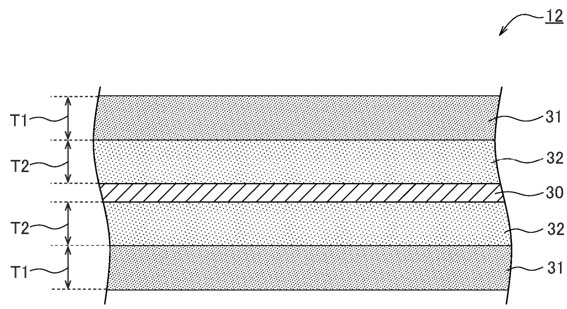


EP 4 693 447 A1

## Description

### TECHNICAL FIELD

The present disclosure relates to a negative electrode for a non-aqueous electrolyte secondary battery and a non-aqueous electrolyte secondary battery.

### BACKGROUND ART

It is known that a silicon-containing material can occlude a lot of lithium ions per unit volume compared with carbon materials such as graphite. Patent Literature 1 discloses a non-aqueous electrolyte secondary battery using a silicon-containing material having silicon-containing particles including a silicate phase and a silicon phase dispersed in the silicate phase, as a negative electrode active material.

### CITATION LIST

### PATENT LITERATURE

PATENT LITERATURE 1: International Publication No. WO2019/151016

### SUMMARY

It is an important challenge in the non-aqueous electrolyte secondary battery to improve charge-discharge cycle characteristics while improving an initial battery capacity. The conventional art including Patent Literature 1 cannot sufficiently deal with the above challenge, and still has large room for improvement.

A negative electrode for a non-aqueous electrolyte secondary battery of one aspect of the present disclosure is a negative electrode for a non-aqueous electrolyte secondary battery, the negative electrode including: a negative electrode core; a first negative electrode mixture layer; and a second negative electrode mixture layer disposed between the first negative electrode mixture layer and the negative electrode core, wherein the first negative electrode mixture layer and the second negative electrode mixture layer contain a carbon material and a silicon-containing material as a negative electrode active material, the silicon-containing material has silicon-containing particles and a coating layer coating at least a part of surfaces of the silicon-containing particles, the coating layer includes a sulfonate compound and a hydrophobic polymer compound, and a porosity ($\varepsilon1$) of the first negative electrode mixture layer and a porosity ($\varepsilon2$) of the second negative electrode mixture layer satisfy $\varepsilon1 > \varepsilon2$.

According to the negative electrode for a non-aqueous electrolyte secondary battery of one aspect of the present disclosure, the non-aqueous electrolyte secondary battery having a high capacity and excellent cycle characteristics may be provided.

### BRIEF DESCRIPTION OF DRAWING

FIG. 1 is a sectional view of a non-aqueous electrolyte secondary battery of an example of an embodiment.
FIG. 2 is a sectional view of a negative electrode of an example of an embodiment.
FIG. 3 is a sectional view schematically illustrating a silicon-containing material of an example of an embodiment.

### DESCRIPTION OF EMBODIMENTS

Conventionally, a non-aqueous electrolyte secondary battery using a carbon material and a silicon-containing material having silicon-containing particles for a negative electrode active material has been known for a purpose of increasing the capacity. Meanwhile, when the negative electrode active material includes the silicon-containing particles, the silicon-containing particles tend to be gradually eroded by a side reaction between the silicon-containing particles and a non-aqueous electrolyte. Progression of the erosion may deteriorate the silicon-containing material to decrease cycle characteristics of the non-aqueous electrolyte secondary battery.

As a result of investigation by the present inventors, it has been found that the side reaction between the silicon-containing particles and the non-aqueous electrolyte is inhibited to improve the cycle characteristics of the non-aqueous electrolyte secondary battery by providing a coating layer including a sulfonate compound and a hydrophobic polymer compound on surfaces of silicon-containing particles. However, merely simply providing the coating layer on the surfaces

of the silicon-containing particles may deteriorate wettability of the silicon-containing material to decrease diffusibility of the non-aqueous electrolyte in a negative electrode mixture layer. As a result, there is a concern of decrease in the battery capacity. Thus, it is not easy to improve the charge-discharge cycle characteristics while improving the initial battery capacity.

The present inventors have made further investigation, and successfully achieved the non-aqueous electrolyte secondary battery having improved initial battery capacity and charge-discharge cycle characteristics by using a silicon-containing material in which a coating layer is provided on surfaces of silicon-containing particles as a negative electrode active material and by setting a negative electrode mixture layer to have a bilayer structure in which a porosity of a first negative electrode mixture layer on a surface side is larger than a porosity of a second negative electrode mixture layer on a core side. It is considered that this is because uniform distribution of a non-aqueous electrolyte in the negative electrode mixture layer is achieved by increasing the porosity in the first negative electrode mixture layer to improve diffusibility of the non-aqueous electrolyte in the negative electrode using the silicon-containing material provided with the coating layer.

Hereinafter, an example of embodiments of the non-aqueous electrolyte secondary battery according to the present disclosure will be described in detail with reference to the drawings. The scope of the present disclosure includes configurations composed of selective combinations of constitutional elements of a plurality of embodiments and modified examples described below. The expression "to" herein means a range including an upper limit and a lower limit of before and after "to".

Hereinafter, a cylindrical battery in which a wound electrode assembly 14 is housed in a bottomed cylindrical exterior housing can 16 will be exemplified as the non-aqueous electrolyte secondary battery, but the exterior body of the battery is not limited to the cylindrical exterior housing can. The non-aqueous electrolyte secondary battery according to the present disclosure may be, for example, a rectangular battery comprising a rectangular exterior housing can, a coin battery comprising a coin-shaped exterior housing can, or a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one end side in an axial direction, and the opening of the exterior housing can 16 is sealed with a sealing assembly 17. Hereinafter, for convenience of description, the sealing assembly 17 side of the battery will be described as the "upper side", and the bottom side of the exterior housing can 16 will be described as the "lower side".

The non-aqueous electrolyte has lithium-ion conductivity. The non-aqueous electrolyte includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted product in which hydrogen of these solvents is at least partially replaced with a halogen atom such as fluorine (for example, fluoroethylene carbonate or the like). For the electrolyte salt, a lithium salt such as $LiPF_6$ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to an inner surface on a bottom of the exterior housing can 16 by welding or the like, and the exterior housing can 16 becomes a negative electrode terminal.

A gasket 28 is provided between the exterior housing can 16 and the sealing assembly 17 to achieve sealability

inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13 to constitute the electrode assembly 14 will be described in detail.

[Positive Electrode]

The positive electrode 11 has a positive electrode core and a positive electrode mixture layer disposed on the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder. The positive electrode 11 may be produced by, for example, applying a positive electrode mixture slurry including the positive electrode active material, the conductive agent, the binder, and the like on the positive electrode core, and drying and subsequently compressing the coating film to form the positive electrode mixture layer on both the surfaces of the positive electrode core.

The positive electrode mixture layer includes lithium metal composite oxide particles as the positive electrode active material. The lithium metal composite oxide is a composite oxide containing a metal element such as Co, Mn, Ni, and Al in addition to Li. The metal element to constitute the lithium metal composite oxide is at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi, for example. Among these, at least one selected from the group consisting of Co, Ni, Al, and Mn is preferably contained. An example of a preferable composite oxide is a lithium metal composite oxide containing Ni, Co, and Mn, or a lithium metal composite oxide containing Ni, Co, and Al.

The lithium-containing composite oxide is of, for example, secondary particles formed by aggregation of a plurality of primary particles. A volume-based median diameter (D50) of the composite oxide is not particularly limited, and an example thereof is greater than or equal to 3 μm and less than or equal to 30 μm, and preferably greater than or equal to 5 μm and less than or equal to 25 μm. When the composite oxide is of the secondary particles formed by aggregation of the primary particles, the D50 of the composite oxide means a D50 of the secondary particles. The D50 means a particle diameter at which a cumulative frequency is 50% from a smaller particle diameter side in a volume-based particle size distribution. The particle size distribution of the composite oxide (the same applies to the negative electrode active material) may be measured by using a laser diffraction-type particle size distribution measuring device (for example, MT3000II, manufactured by MicrotracBEL Corp.) with water as a dispersion medium.

An average particle diameter of the primary particles constituting the lithium-containing composite oxide is, for example, greater than or equal to 0.05 μm and less than or equal to 1 μm. The average particle diameter of the primary particles is calculated by averaging diameters of circumscribed circles in the primary particles extracted by analyzing a scanning electron microscope (SEM) image of a cross section of the secondary particles.

Examples of the conductive agent included in the positive electrode mixture layer may include carbon materials such as carbon black such as acetylene black and Ketjenblack, graphite, carbon nanotube (CNT), carbon nanofiber, and graphene. Examples of the binder included in the positive electrode mixture layer may include fluorine-containing resins such as polytetrafluoroethylene (PTFE) and polyvinylidene fluoride (PVDF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

[Negative Electrode]

FIG. 2 is a sectional view of the negative electrode 12 in an example of an embodiment. As illustrated in FIG. 2, the

negative electrode 12 includes a negative electrode core 30, a first negative electrode mixture layer 31 disposed on a surface of the negative electrode 12, and a second negative electrode mixture layer 32 that is disposed between the first negative electrode mixture layer 31 and the negative electrode core 30 and that has a porosity smaller than that of the first negative electrode mixture layer 31. Hereinafter, the first negative electrode mixture layer 31 and the second negative electrode mixture layer 32 may be collectively referred to as the negative electrode mixture layer.

For the negative electrode core 30, a foil of a metal stable within a potential range of the negative electrode 12, such as copper, a film in which such a metal is disposed on a surface thereof, and the like may be used. A thickness of the negative electrode core 30 is not particularly limited, but preferably greater than or equal to 1 μm and less than or equal to 50 μm, and more preferably greater than or equal to 5 μm and less than or equal to 20 μm from the viewpoint of balance between strength and lightweighting of the negative electrode. The first negative electrode mixture layer 31 and the second negative electrode mixture layer 32 are preferably provided on both the surfaces of the negative electrode core 30 except for a portion where the negative electrode lead 21 is to be connected. The aspect of the negative electrode 12 is not limited to the example in FIG. 2, and for example, a functional layer or the like may be disposed between the second negative electrode mixture layer 32 and the negative electrode core 30.

As illustrated in FIG. 2, when a thickness of the first negative electrode mixture layer is defined as T1 and a thickness of the second negative electrode mixture layer is defined as T2, T1/(T1+T2) is preferably greater than or equal to 0.1, more preferably greater than or equal to 0.15, and further preferably greater than or equal to 0.2. In this case, diffusibility of the non-aqueous electrolyte in the first negative electrode mixture layer 31 is further improved to easily achieve uniform distribution of the non-aqueous electrolyte in the negative electrode mixture layer. T1/(T1+T2) is preferably less than or equal to 0.5, more preferably less than or equal to 0.45, and further preferably less than or equal to 0.4. In this case, the capacity of the battery is easily increased. Thus, an example of a preferable range of T1/(T1+T2) is $0.1 \leq T1/(T1+T2) \leq 0.5$, more preferably $0.15 \leq T1/(T1+T2) \leq 0.45$, and further preferably $0.2 \leq T1/(T1+T2) \leq 0.4$. Each of the thicknesses of the first negative electrode mixture layer 31 and the second negative electrode mixture layer 31 is greater than or equal to 10 μm and less than or equal to 300 μm, for example.

When the porosity of the first negative electrode mixture layer 31 is defined as ε1 and the porosity of the second negative electrode mixture layer 32 is defined as ε2, ε1 and ε2 satisfy $\varepsilon 1 > \varepsilon 2$. When ε1 and ε2 satisfy $\varepsilon 1 > \varepsilon 2$, the non-aqueous electrolyte is easily diffused in the first negative electrode mixture layer to achieve uniform distribution of the non-aqueous electrolyte in the negative electrode mixture layer. As a result, even when the coating layer is provided on the surface of the silicon-containing material, resistance of the negative electrode may be reduced to improve the battery capacity.

It is preferable that ε1 and ε2 satisfy $1 < \varepsilon 1/\varepsilon 2 \leq 5$, and ε1 and ε2 more preferably satisfy $1.2 \leq \varepsilon 1/\varepsilon 2 \leq 3$. In this case, the effect of the present disclosure may be exhibited more remarkably. In addition, ε1 is preferably greater than or equal to 10%, and more preferably greater than or equal to 20%. In addition, ε2 is preferably greater than or equal to 5%, and more preferably greater than or equal to 15%. Upper limits of ε1 and ε2 are 50%, for example. The porosity of the negative electrode mixture layer is a two-dimensional value determined from a ratio of an area of spaces relative to a sectional area of the negative electrode mixture layer on the cross section of the negative electrode mixture layer. More specifically, ε1 and ε2 may be calculated by the following procedure.

<Method for Measuring of Porosity (ε1, ε2)>

(1) A cross section of the negative electrode mixture layer is exposed. Examples of the method for exposing the cross section include a method of cutting a part of the negative electrode and processing the negative electrode with an ion-milling apparatus (for example, IM4000PLUS, manufactured by Hitachi High-Tech Corporation) to expose the cross section of the negative electrode mixture layer.

(2) By using a scanning electron microscope, a backscattered electron image of the exposed cross section of each of the first negative electrode mixture layer 31 and the second negative electrode mixture layer 32 in the exposed negative electrode mixture layer is photographed. The magnification with photographing the backscattered electron image is, for example, 800x. The following treatments (3) and (4) are performed on the first negative electrode mixture layer 31 and the second negative electrode mixture layer 32 to calculate each of the porosities.

(3) The sectional image obtained from the above is imported into a computer, and subjected to binarization processing by using an image analysis software (for example, ImageJ, available from National Institutes of Health). A binarization-processed image is obtained in which a particle cross section in the sectional image is converted in black and spaces present in the particle cross section are converted in white.

(4) In the portion of the spaces converted in white in the binarization-processed image obtained from the above, portions excluding spaces inside the particles (pores not connected with the particle surfaces) and pores having a width of less than or equal to 3 μm and connected with the particle surfaces are specified as the spaces, and the area of

the spaces is calculated. The porosity is calculated based on the following formula.

Porosity (%) = Area of spaces / Area of cross section of negative electrode mixture layer × 100

(5) The porosity of each of the first negative electrode mixture layer 31 and the second negative electrode mixture layer 32 is calculated with the (3) and (4) three times, and the average values thereof are specified as the porosity of the first negative electrode mixture layer 31 and the porosity of the second negative electrode mixture layer 32.

When the tortuosity of the first negative electrode mixture layer 31 is defined as $\tau 1$ and the tortuosity of the second negative electrode mixture layer 32 is defined as $\tau 2$, $\tau 1$ and $\tau 2$ preferably satisfy $\tau 1 < \tau 2$. Here, the tortuosity of the mixture layer is an index indicating a degree of tortuousness of spaces (pores) formed in the mixture layer and through which the non-aqueous electrolyte passes. A smaller tortuosity means less tortuousness of a pathway of the space. The tortuosity is a value of a distance (a pathway length) from a start point to an end point of the space in the mixture layer divided by a linear distance from the start point to the end point of the space in the mixture layer, as described later. That is, when the pathway length is the same as the linear distance from the start point to the end point of the space in the mixture layer, the tortuosity is 1. Thus, when $\tau 1$ and $\tau 2$ satisfy $\tau 1 < \tau 2$, diffusibility of the non-aqueous electrolyte in the first negative electrode mixture layer 31 is improved to achieve uniform distribution of the non-aqueous electrolyte in the negative electrode mixture layer. As a result, even when the coating layer is provided on the surface of the silicon-containing material, resistance of the negative electrode may be reduced to improve the battery capacity.

It is preferable that $\tau 1$ and $\tau 2$ satisfy $0.3 \leq \tau 1/\tau 2 < 1$, and $\tau 1$ and $\tau 2$ more preferably satisfy $0.4 \leq \tau 1/\tau 2 \leq 0.8$. This may exhibit the effect of the present disclosure more remarkably. For example, $\tau 1$ is greater than or equal to 1.1 and less than or equal to 3.0, and $\tau 2$ is, for example, greater than or equal to 1.3 and less than or equal to 4.0.

The tortuosity of the negative electrode mixture layer herein is calculated by the following formula. "$\tau$" represents the tortuosity, "f" represents the pathway length through which Medial Axis passes penetrating faces opposite to each other in the thickness direction (abbreviated as "pathway length"), and "s" represents a length of a straight line bonding the start point and the end point of the pathway of "f" (abbreviated as "linear distance of end-start points". A sample for evaluating the tortuosity is in a fully discharged state.

$$\tau = f/s$$

The tortuosities of the first negative electrode mixture layer 31 and the second negative electrode mixture layer 32 may be calculated below.

$$\tau 1 = f1/s1$$

$$\tau 2 = f2/s2$$

($\tau 1$: the tortuosity of the first negative electrode mixture layer 31, f1: the pathway length of the first negative electrode mixture layer 31, s1: the linear distance of the end-start points of the first negative electrode mixture layer 31)
($\tau 2$: the tortuosity of the second negative electrode mixture layer 32, f2: the pathway length of the second negative electrode mixture layer 32, s2: the linear distance of the end-start points of the second negative electrode mixture layer 32)

The pathway length and the linear distance are determined by sectional observation and image analysis of the negative electrode mixture layer using a 3D scanning electron microscope (3DSEM, for example, Ethos NX-5000, manufactured by Hitachi High-Tech Corporation).

The specific calculation method of the tortuosity is as follows.

(1) The construction mixture material with the three-dimensional structure with 3DSEM is placed on a sample table of the 3DSEM to alternately perform continuous sectional slicing and sectional observation. The observation is performed at an acceleration voltage of 5 kV. The obtained two-dimensional continuous images are subjected to image binarization with a three-dimensional image analysis software (for example, EX FACT VR, available from Nihon Visual Science, Inc.), and these images are combined to construct a three-dimensional structure. The three-dimensional structure preferably has a size of greater than or equal to 100 μm × 100 μm × 100 μm.

(2) Determination of Boundary between First Negative Electrode Mixture Layer 31 and Second Negative Electrode Mixture Layer 32

From the three-dimensional structure image obtained in (1), a boundary of regions with different spaces in the thickness direction is determined as a boundary line between the first negative electrode mixture layer 31 and the second negative electrode mixture layer 32.

(3) Determination of f1, f2, s1, and s2 in First Negative Electrode Mixture Layer 31 and Second Negative Electrode Mixture Layer 32

The image of the three-dimensional structure obtained in (1) is divided into the first negative electrode mixture layer 31 and the second negative electrode mixture layer 32 at the ratio determined in (2), and the space extracted by the binarization is thinned to determine an axis passing through a center of the space (Medeial Axis). The Medial Axis present in a cube and penetrating the core surface in the vertical direction is extracted, and the shortest pathway of one branched pathway is determined as the pathway length (f1 and f2) of the mixture material.

(4) Calculation of Tortuosities of First Negative Electrode Mixture Layer 31 and Second Negative Electrode Mixture Layer 32

By using the average pathway lengths (f1 and f2) and the average linear distances (s1 and s2) bonding the pathway of the first negative electrode mixture layer 31 and the second negative electrode mixture layer 32 obtained in (3), tortuosities of the first negative electrode mixture layer 31 and the second negative electrode mixture layer 32 are calculated by the above formula, and then $\tau 1/\tau 2$ being the ratio thereof is calculated.

The porosities and the tortuosities of the first negative electrode mixture layer 31 and the second negative electrode mixture layer 32 may be controlled by changing a linear pressure in the rolling step for the mixing layer. More specifically, the second negative electrode mixture layer 32 is formed on the surface of the negative electrode core 30, a first rolling step is performed, then the first negative electrode mixture layer 31 is formed on the second negative electrode mixture layer 32, and a second rolling step is performed. In this case, the linear pressure in the second rolling step is set to be smaller than the compressing force in the first rolling step. The porosity ($\varepsilon 1$) of the first negative electrode mixture layer 31 may be set to be greater than the porosity ($\varepsilon 2$) of the second negative electrode mixture layer, and the tortuosity ($\tau 1$) of the first negative electrode mixture layer 31 may be set to be smaller than the tortuosity ($\tau 2$) of the second negative electrode mixture layer. The porosities and the tortuosities of the first negative electrode mixture layer 31 and the second negative electrode mixture layer 32 may also be controlled by using carbon materials or silicon-containing materials having different hardnesses. Use of a carbon material or a silicon-containing material having a large hardness may increase the porosity of the negative electrode mixture layer and may reduce the tortuosity.

The first negative electrode mixture layer 31 and the second negative electrode mixture layer 32 include a carbon material and a silicon-containing material as the negative electrode active material. Including the silicon-containing material may achieve increase in high capacity. Meanwhile, since the silicon-containing material causes large change in volume during charge and discharge compared with the carbon material, the negative electrode mixture layer including the silicon-containing material tends to cause unevenness of distribution of the non-aqueous electrolyte in the negative electrode mixture layer. However, as noted above, setting the porosity ($\varepsilon 1$) of the first negative electrode mixture layer 31 to be larger than the porosity ($\varepsilon 2$) of the second negative electrode mixture layer 32 uniformizes distribution of the non-aqueous electrolyte in the negative electrode mixture layer, which may achieve the non-aqueous electrolyte secondary battery having high capacity and excellent cycle characteristics.

The carbon material is, for example, at least one selected from the group consisting of natural graphite, artificial graphite, soft carbon, and hard carbon. Among these, at least artificial graphite such as massive artificial graphite (MAG) and graphitized mesophase-carbon microbead (MCMB); natural graphite such as flake graphite, massive graphite, or amorphous graphite; or a mixture thereof is preferably used as the carbon material. A volume-based D50 of the carbon material is, for example, greater than or equal to 1 $\mu$m and less than or equal to 30 $\mu$m, and preferably greater than or equal to 5 $\mu$m and less than or equal to 25 $\mu$m.

As illustrated in FIG. 3, a silicon-containing material 40 has silicon-containing particles 41 and a coating layer 42 coating at least a part of surfaces of the silicon-containing particles 41. The coating layer 42 includes a sulfonate compound and a hydrophobic polymer compound. In other words, the coating layer 42 is a mixed layer of the sulfonate compound and the hydrophobic polymer compound. Coating of the surfaces of the silicon-containing particles 41 with the coating layer including the sulfonate compound protects the silicon-containing particles 41 from the non-aqueous electrolyte. As a result, a side reaction between the silicon-containing particles 41 and the non-aqueous electrolyte is inhibited to inhibit erosion of the silicon-containing particles 41 due to the side reaction. In addition, deterioration in the cycle characteristics of the non-aqueous electrolyte secondary battery due to deterioration in the silicon-containing particles 41 caused by the

erosion is inhibited.

In the coating layer 42, setting the sulfonate compound to be present with the hydrophobic polymer compound improves retainability of the sulfonate compound on the surfaces of the silicon-containing particles 41, which may more effectively coat the surfaces of the silicon-containing particles 41 with the sulfonate compound. As a result, the side reaction between the silicon-containing particles 41 and the non-aqueous electrolyte is more inhibited.

As illustrated in FIG. 3, the silicon-containing particles 41 preferably include an ion-conductive phase 43 and a silicon phase 44 dispersed in the ion-conductive phase 43. The ion-conductive phase 43 is a continuous phase constituted with aggregation of particles finer than the silicon phase 44. The ion-conductive phase 43 is, for example, at least one selected from the group consisting of a silicate phase, a carbon phase, a silicide phase, and a silicon oxide phase. The silicon phase 44 is formed with Si fine particles, and dispersed in the ion-conductive phase 43.

In addition, a conductive layer (not illustrated) including a conductive carbon material may be disposed between the silicon-containing particles 41 and the coating layer 42. Disposing of the conductive layer may form a good conductive pathway in the negative electrode mixture layer, which may further improve the battery capacity.

Here, when the content rate of the silicon-containing material 40 in the first negative electrode mixture layer 31 (see FIG. 2) is defined as $\theta 1$ and the content rate of the silicon-containing material 40 in the second negative electrode mixture layer 32 (see FIG. 2) is defined as $\theta 2$, $\theta 1$ and $\theta 2$ preferably satisfy $\theta 1 > \theta 2$. In this case, charge-discharge reactions in the first negative electrode mixture layer 31 may be more promoted to achieve the non-aqueous electrolyte secondary battery having high capacity and excellent cycle characteristics. In addition, $\theta 1$ and $\theta 2$ preferably satisfy $1.1 \leq \theta 1/\theta 2 \leq 3$, and more preferably satisfy $1.2 \leq \theta 1/\theta 2 \leq 2$. For example, $\theta 1$ is greater than or equal to 3% by mass and less than or equal to 50% by mass of the total mass of the negative electrode active material in the first negative electrode mixture layer 31. For example, $\theta 2$ is greater than or equal to 3% by mass and less than or equal to 20% by mass of the total mass of the negative electrode active material in the second negative electrode mixture layer 32.

The first negative electrode mixture layer 31 and the second negative electrode mixture layer 32 may contain a conductive agent and a binder in addition to the negative electrode active material.

The conductive agent may include particle carbon such as carbon black, acetylene black, Ketjenblack, and graphite, but preferably includes fibrous carbon. Examples of the fibrous carbon include carbon nanotube (CNT) and carbon nanofiber. CNT may not be single-wall CNT but may be double-wall CNT, multiwall CNT, and a mixture thereof. In addition, CNT may be vapor-grown carbon fiber called VGCF(R). The fibrous carbon has a diameter of greater than or equal to 2 nm and less than or equal to 20 μm and a total length of greater than or equal to 0.03 μm and less than or equal to 500 μm, for example. Use of the fibrous carbon as the conductive agent further improves conductivity of the negative electrode mixture layer, which may further improve the battery capacity.

Here, when the content rate of the fibrous carbon in the first negative electrode mixture layer 31 is defined as $\phi 1$ and the content rate of the fibrous carbon in the second negative electrode mixture layer 32 is defined as $\phi 2$, $\phi 1$ and $\phi 2$ preferably satisfy $1 \leq \phi 2/\phi 1 \leq 8$. In this case, the charge-discharge reactions in the first negative electrode mixture layer 31 may be further promoted to achieve the non-aqueous electrolyte secondary battery having high capacity and excellent cycle characteristics. In addition, $\phi 1$ and $\phi 2$ more preferably satisfy $1 < \phi 2/\phi 1 \leq 8$, further preferably satisfy $3 \leq \phi 2/\phi 1 \leq 8$, and particularly preferably satisfy $3 \leq \phi 2/\phi 1 \leq 5$. In this case, the non-aqueous electrolyte secondary battery having higher capacity and more excellent cycle characteristics may be achieved.

In the negative electrode mixture layer in which the content rate ($\theta 1$) of the silicon-containing material 40 in the above first negative electrode mixture layer 31 and the content rate ($\theta 2$) of the silicon-containing material 40 in the second negative electrode mixture layer 32 satisfy $\theta 1 > \theta 2$, $\theta 1$ and $\theta 2$ more preferably satisfy $1 \leq \phi 2/\phi 1 \leq 8$. In this case, the charge-discharge reactions in the first negative electrode mixture layer 31 may be further promoted to achieve the non-aqueous electrolyte secondary battery having high capacity and excellent cycle characteristics. For example, $\phi 1$ is greater than or equal to 0.01% by mass and less than or equal to 5% by mass, and preferably greater than or equal to 0.01% by mass and less than or equal to 3% by mass relative to the total mass of the first negative electrode mixture layer 31. In addition, $\phi 2$ is greater than or equal to 0.005% by mass and less than or equal to 5% by mass, and preferably greater than or equal to 0.005% by mass and less than or equal to 1% by mass relative to the total mass of the second negative electrode mixture layer 32, for example.

Examples of the binder include styrene-butadiene rubber (SBR), nitrile-butadiene rubber (NBR), fluorine-containing resins such as polytetrafluoroethylene (PTFE) and polyvinylidene fluoride (PVDF), polyacrylonitrile (PAN), a polyimide, an acrylic resin, and a polyolefin. Among these, SBR and NBR are preferable, and SBR is particularly preferable. These may be used singly, or may be used in combination of two or more thereof. The binder included in the first negative electrode mixture layer 31 and the binder included in the second negative electrode mixture layer 32 may be different from each other, but are preferably the same.

The negative electrode mixture layer may further contain a thickener. Examples of the thickener include carboxymethylcellulose (CMC) or a salt thereof (such as CMC-Na), polyacrylic acid (PAA) or a salt thereof (which may be PAA-Na, PAA-K, and the like, or a partially neutralized salt), and polyvinyl alcohol (PVA). These may be used singly or in combination of two or more thereof. The thickener included in the first negative electrode mixture layer 31 and the

thickener included in the second negative electrode mixture layer 32 may be different from each other, but are preferably the same.

Hereinafter, the silicon-containing material included in the negative electrode active material constituting the negative electrode will be described in detail.

As noted above, the silicon-containing material has the silicon-containing particles and the coating layer coating at least a part of the surfaces of the silicon-containing particles. The coating layer includes the sulfonate compound and the hydrophobic polymer compound.

[Silicon-Containing Particles]

The silicon-containing particles are preferably composite particles including an ion-conductive phase and a silicon phase dispersed in the ion-conductive phase. This allows stress caused by expansion and contraction of the silicon phase during charge and discharge to be further relaxed by the ion-conductive phase, and inhibits cracks and fractures of the silicon-containing particles. The ion-conductive phase is a continuous phase constituted with aggregation of particles finer than the silicon phase. The ion-conductive phase is, for example, at least one selected from the group consisting of a silicate phase, a carbon phase, a silicide phase, and a silicon oxide phase. The ion-conductive phase may be constituted with one phase, or may be constituted with a plurality of phases.

The silicate phase is constituted with a compound including a metal element, Si, and O. The silicide phase is a phase of a compound composed of Si and an element that is electrically more positive than Si, and examples thereof include NiSi, $Mg_2Si$, and $TiSi_2$. The silicon oxide phase is constituted with a compound of Si and O. A main component (for example, greater than or equal to 95% by mass and less than or equal to 100% by mass) of the silicon oxide phase may be $SiO_2$.

The silicon phase is formed with fine Si particles, and dispersed in the ion-conductive phase. An average particle diameter of the silicon phase is, for example, less than or equal to 500 nm, preferably less than or equal to 250 nm, and more preferably less than or equal to 150 nm before charge and discharge. An average particle diameter of the silicon phase is, for example, preferably less than or equal to 200 nm, and more preferably less than or equal to 100 nm after charge and discharge. Fining the silicon phase reduces change in volume of the silicon-containing material during charge and discharge to easily inhibit collapse of the electrode structure. The average particle diameter of the silicon phase is measured by observing the cross section of the silicon-containing particles with a SEM or a TEM, and specifically determined by averaging the longest diameters of 100 of the silicon phases.

The silicon phase is, for example, a particle phase of an elemental Si, and constituted with a single or plurality of crystallites. The crystallite size of the silicon phase is, for example, greater than or equal to 5 nm and less than or equal to 50 nm. When the crystallite size of the silicon phase is less than or equal to 50 nm, change in volume due to expansion and contraction of the silicon phase with charge and discharge may be reduced to further improve the cycle characteristics. The crystallite size of the silicon phase is calculated by a Scherrer equation from a half-value width of a diffraction peak assigned to a Si (111) face of an X-ray diffraction (XRD) pattern.

The content rate of the silicon phase is preferably greater than or equal to 20% by mass, and more preferably greater than or equal to 35% by mass relative to the mass of the silicon-containing particles. In this case, increase in capacity is easily achieved. In addition, the content rate of the silicon phase is preferably less than or equal to 95% by mass, and more preferably less than or equal to 75% by mass relative to the mass of the silicon-containing particles. In this case, the silicon phase may be coated with the ion-conductive phase, and the side reaction between the silicon phase and the non-aqueous electrolyte is inhibited to improve the cycle characteristics. Thus, an example of the preferable range of the content rate of the silicon phase is greater than or equal to 20% by mass and less than or equal to 95% by mass, and more preferably greater than or equal to 35% by mass and less than or equal to 75% by mass relative to the mass of the silicon-containing particles.

A volume-based D50 of the silicon-containing particles is typically smaller than the volume-based D50 of the carbon material. The volume-based D50 of the silicon-containing particles is, for example, greater than or equal to 1 μm and less than or equal to 25 μm, and may be greater than or equal to 4 μm and less than or equal to 15 μm. When the volume-based D50 of the silicon-containing particles is within the above range, the good battery performance is easily obtained.

An example of the silicon-containing particles is composite particles having a sea-island structure in which fine Si particles are substantially uniformly dispersed in the carbon phase. Here, the carbon phase is preferably an amorphous carbon phase. The carbon phase may include a crystal phase component, but preferably includes the amorphous phase component at a larger amount. The amorphous carbon phase is constituted with a carbon material in which an average spacing of a (002) face measured by X-ray diffraction is more than 0.34 nm.

Another example of the silicon-containing particles is composite particles including a silicate phase and a silicon phase dispersed in the silicate phase. The silicate phase may include at least one selected from the group consisting of group I elements and group II elements in the periodic table. The silicate phase may include at least one selected from the

group consisting of B, Al, Zr, Nb, Ta, V, Y, Ti, P, Bi, Zn, Sn, Pb, Sb, Co, Er, F, W, and lanthanoids.

In the silicon-containing particles including the silicate phase and the silicon phase dispersed in the silicate phase, the preferable silicate phase is a lithium silicate phase containing Li. In this case, intercalating and deintercalating of lithium ions in the silicate phase become easy. The lithium silicate phase is, for example, a phase of a composite oxide represented by a general formula $Li_{2z}SiO_{(2+z)}$ ($0 < z < 2$). The lithium silicate phase preferably does not include $Li_4SiO_4$ (Z=2). $Li_4SiO_4$, which is an unstable compound, reacts with water and exhibits alkalinity, and therefore may modify Si, resulting in decrease in the charge-discharge capacity. The lithium silicate phase preferably contains $Li_2SiO_3$ (Z=1) or $Li_2Si_2O_5$ (Z=1/2) as a main component from the viewpoints of stability, productivity, Li-ion conductivity, and the like.

The silicon-containing particles including the silicate phase and the silicon phase dispersed in the silicate phase are produced via the following steps (1) to (3), for example.

(1) Si and lithium silicate are mixed at a mass ratio at, for example, greater than or equal to 20:80 and less than or equal to 95:5 to produce a mixture.
(2) Then, the mixture was crushed to produce fine particles by using a ball mill. Note that each of the raw material powders may be made into fine particles, and then the mixture may be produced.
(3) The crushed mixture is subjected to a thermal treatment in, for example, an inert atmosphere at greater than or equal to 600°C and less than or equal to 1000°C. In this thermal treatment, a pressure may be applied like a hot press to produce a sintered product of the mixture. In this case, the sintered product is crushed to have a predetermined particle diameter. The lithium silicate represented by $Li_{2z}SiO_{(2+z)}$ ($0 < z < 2$) is stable within the above temperature range and does not react with Si, and thereby not decreasing the capacity. In addition, it is also possible to synthesis Si nanoparticles and lithium silicate nanoparticles without a ball mill, and mix these nanoparticles and perform the thermal treatment to produce the silicon-containing particles.

[Coating Layer]

As noted above, the coating layer includes the sulfonate compound and the hydrophobic polymer compound. A thickness of the coating layer is preferably greater than or equal to 1 nm, and more preferably greater than or equal to 5 nm. In this case, the side reaction between the silicon-containing particles and the non-aqueous electrolyte is effectively inhibited. The thickness of the coating layer is preferably less than or equal to 300 nm, and more preferably less than or equal to 200 nm. In this case, decrease in conductivity of the silicon-containing material may be inhibited. Thus, an example of a preferable range of the thickness of the coating layer is greater than or equal to 1 nm and less than or equal to 300 nm, and more preferably greater than or equal to 3 nm and less than or equal to 200 nm. Note that the thickness of the coating layer is measured by observing a cross section of the silicon-containing material using a SEM or a TEM.

The sulfonate compound included in the coating layer is preferably a compound represented by the following formula (I). In the formula, A is a group I or group II element, R is a hydrocarbon group, and "n" is 1 or 2. A is preferably a group I element. Among these, A is more preferably Li or Na, and particularly preferably Li.

[Formula 1]

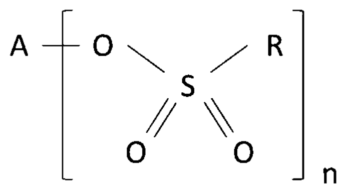

(I)

In the formula (I), R is preferably an alkyl group. A number of carbon atoms in the alkyl group is preferably less than or equal to 5, and more preferably less than or equal to 3. From the viewpoints of reduction in reaction resistance in the negative electrode, and the like, an example of the preferable R is an alkyl group having less than or equal to 3 carbon atoms, and particularly preferably a methyl group. In R, hydrogens bonded to carbon may be partially substituted with fluorine. In the formula (I), "n" is preferably 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Among these, at least one selected from the group consisting of lithium methanesulfonate, lithium ethanesulfonate, and sodium methanesulfonate is preferable, and lithium methanesulfonate is particularly preferable.

An amount of the sulfonate compound coating the surfaces of the silicon-containing particles is preferably greater than or equal to 0.1% by mass, and more preferably greater than or equal to 1% by mass relative to the total mass of the

silicon-containing particles. If the amount of the sulfonate compound is less than 0.1% by mass, the surfaces of the silicon-containing particles cannot be sufficiently coated with the sulfonate compound, and the effect of inhibiting the side reaction by the sulfonate compound may fail to be obtained. The amount of the sulfonate compound coating the surfaces of the silicon-containing particles is preferably less than or equal to 10% by mass, and preferably less than or equal to 6% by mass relative to the total mass of the silicon-containing particles. If the amount of the sulfonate compound is greater than 10% by mass, the coating layer becomes excessively thick, and conductivity of the silicon-containing material may be decreased to decrease the battery capacity. Thus, an example of a preferable range of the amount of the sulfonate compound coating the surfaces of the silicon-containing particles is preferably greater than or equal to 0.1% by mass and less than or equal to 10% by mass, and more preferably greater than or equal to 1% by mass and less than or equal to 6% by mass relative to the total mass of the silicon-containing particles.

The presence of the sulfonate compound coating the surfaces of the silicon-containing particles may be confirmed by Fourier transform infrared spectrometry (FT-IR). In an infrared absorption spectrum obtained by FT-IR, the silicon-containing material including lithium methanesulfonate has absorption peaks near 1238 $cm^{-1}$, 1175 $cm^{-1}$, 1065 $cm^{-1}$, and 785 $cm^{-1}$, for example. The peaks near 1238 $cm^{-1}$, 1175 $cm^{-1}$, and 1065 $cm^{-1}$ are peaks attributed to SO stretching vibration derived from lithium methanesulfonate. The peak near 785 $cm^{-1}$ is a peak attributed to CS stretching vibration derived from lithium methanesulfonate. Also, in the silicon-containing material including the sulfonate compound other than lithium methanesulfonate, the presence thereof may be confirmed from the absorption peak derived from the sulfonate compound of the infrared absorption spectrum.

The presence of the sulfonate compound coating the surfaces of the silicon-containing particles may also be confirmed by X-ray photoelectron spectrometry (XPS). In a spectrum obtained by XPS of the silicon-containing material including lithium methanesulfonate, a peak is observed near a bonding energy of greater than or equal to 165 eV and less than or equal to 170 eV with an intensity (c/s) of greater than or equal to 200 and less than or equal to 1000. The presence of the sulfonate compound coating the surfaces of the silicon-containing particles may also be confirmed by ICP, atomic absorption spectrometry, synchrotron XRD measurement, TOF-SIMS, or the like.

The hydrophobic polymer compound desirably has good binding property and thermally melting property. In this case, the hydrophobic polymer compound may strongly retain the sulfonate compound on the surfaces of the silicon-containing particles. As a result, the side reaction between the silicon-containing particles and the non-aqueous electrolyte is more inhibited, which may inhibit erosion of the silicon-containing particles derived therefrom.

From the viewpoint of stability against the non-aqueous electrolyte, the hydrophobic polymer compound preferably includes a fluororesin. Examples of the fluororesin include polyvinylidene fluoride (PVDF), polytetrafluoroethylene, tetrafluoroethylene-perfluoroalkyl vinyl ether copolymer, tetrafluoroethylene-hexafluoropropylene copolymer, tetrafluoroethylene-ethylene copolymer, chlorotrifluoroethylene-ethylene copolymer, and polychlorotrifluoroethylene. Among these, PVDF is preferable. The case of PVDF has a good binding property, and a low melting point, which may form the coating layer at a low thermal treatment temperature.

The hydrophobic polymer compound may include a polymer including a vinylidene fluoride unit, in addition to polyvinylidene fluoride. Examples of the polymer including the vinylidene fluoride unit include a copolymer of vinylidene fluoride and another monomer. Examples of the other monomer include hexafluoropropylene (HFP) and tetrafluoroethylene (TFE). Examples of the polymer including the vinylidene fluoride unit include polyvinylidene fluoride and a modified product thereof, vinylidene fluoride-hexafluoropropylene copolymer, and vinylidene fluoride-chlorotrifluoroethylene copolymer.

An amount of the hydrophobic polymer compound coating the surfaces of the silicon-containing particles is preferably greater than or equal to 0.1% by mass, and more preferably greater than or equal to 1% by mass relative to the total mass of the silicon-containing particles. If the amount of the hydrophobic polymer compound is less than 0.1% by mass, the surfaces of the silicon-containing particles cannot be sufficiently coated with the hydrophobic polymer compound, and deterioration in the charge-discharge cycle characteristics may not be effectively inhibited. The amount of the hydrophobic polymer compound is preferably less than or equal to 10% by mass, and more preferably less than or equal to 6% by mass relative to the total mass of the silicon-containing particles. If the amount of the sulfonate compound is greater than 10% by mass, the coating layer becomes excessively thick, and conductivity of the silicon-containing material may be decreased to decrease the battery capacity. Thus, an example of a preferable range of the amount of the hydrophobic polymer compound coating the surfaces of the silicon-containing particles is preferably greater than or equal to 0.1% by mass and less than or equal to 10% by mass, and more preferably greater than or equal to 1% by mass and less than or equal to 6% by mass relative to the total mass of the silicon-containing particles.

When the coating layer includes the sulfonate compound and the fluororesin (for example, PVDF), the amounts of the sulfonate compound and the fluororesin may be determined as follows: the silicon-containing material is washed with N-methyl-2-pyrrolidone (NMP) to dissolve the fluororesin, and a mass difference of NMP before and after the dissolution may be determined as the mass of the fluororesin; and a residue not dissolved in NMP is washed with water to dissolve the sulfonate compound, and the mass of the sulfonate compound dissolved in water may be determined by ICP.

Examples of a method for forming the coating layer include a method of dry-mixing the silicon-containing particles

and powder of the sulfonate compound and the hydrophobic polymer compound to produce a mixture; and subjecting this mixture to a thermal treatment at a temperature greater than or equal to a melting point of the hydrophobic polymer compound (for example, greater than or equal to 150°C and less than or equal to 340°C). A time for the thermal treatment is, for example, greater than or equal to 1 hour and less than or equal to 3 hours. The particle diameters of the sulfonate compound and the hydrophobic polymer compound to be mixed with the silicon-containing particles are preferably each smaller than the particle diameter of the silicon-containing particles. In this case, the surfaces of the silicon-containing particles are easily coated with the sulfonate compound and the hydrophobic polymer compound uniformly, and the effect of the present disclosure is remarkably exhibited. The particle diameters of the sulfonate compound and the hydrophobic polymer compound are, for example, greater than or equal to 1 μm and less than or equal to 100 μm.

[Conductive Layer]

From the viewpoint of improvement of the conductivity, a conductive layer including a conductive carbon material may be disposed between the silicon-containing particles and the coating layer. In other words, the conductive layer coats at least a part of the surface of the ion-conductive phase of the silicon-containing particles. The conductive layer is constituted with a material having higher conductivity than the ion-conductive phase, and forms a good conductive pathway in the negative electrode mixture layer. As the carbon material to constitute the conductive layer, carbon black, acetylene black, Ketjenblack, graphite, a mixture of two or more thereof, and the like may be used, for example. The conductive layer may include a metal or a metal compound. For the metal, copper, nickel, an alloy thereof, and the like, which are stable within a potential range of the negative electrode, may be used. As the metal compound, a copper compound, a nickel compound, and the like may be used.

Examples of a method for coating the surface of the silicon-containing particles with carbon may include: a CVD method using acetylene, methane, or the like; and a method of mixing coal pitch, petroleum pitch, a phenol resin, or the like with the silicon-containing particles, and performing a thermal treatment.

The conductive layer is preferably provided so as to coat a substantially entire region of the surfaces of the silicon-containing particles. A thickness of the conductive layer is preferably greater than or equal to 1 nm and less than or equal to 200 nm, and more preferably greater than or equal to 5 nm and less than or equal to 100 nm. An excessively thin conductive layer makes it difficult to coat the silicon-containing particles uniformly, which decreases conductivity of the silicon-containing material. An excessively thick conductive layer inhibits diffusion of lithium ions toward the silicon-containing particles, which tends to decrease the battery capacity. The thickness of the conductivity may be measured by sectional observation of the particles using a SEM, a TEM, or the like.

[separator]

For the separator 13, a porous sheet having an ion permeation property and an insulation property is used, for example. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. On a surface of the separator 13, a highly heat-resistant resin layer such as an aramid resin, may be formed.

On an interface between the separator 13 and at least one of the positive electrode 11 and the negative electrode 12, a filler layer including an inorganic filler may be formed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13.

EXAMPLES

Hereinafter, the present disclosure will be further described with Examples, but the present disclosure is not limited to these Examples.

<Example 1>

[Production of Positive Electrode]

A composite hydroxide obtained by a coprecipitation method and represented by $[Ni_{0.88}Co_{0.09}Al_{0.03}](OH)_2$ was calcined at 500°C for 8 hours to obtain an oxide ($Ni_{0.88}Co_{0.09}Al_{0.03}O_2$). Then, LiOH and this composite oxide were mixed so that a molar ratio between Li and a total amount of Ni, Co, and Al was 1.03:1 to obtain a mixture. This mixture was calcined under an oxygen flow at an oxygen concentration of 95% (a flow rate of 2 mL/min per 10 $cm^3$ and 5 L/min per kilogram of the mixture) at a temperature-raising rate of 2.0°C/min from room temperature to 650°C, and then calcined at a temperature-raising rate of 0.5°C/min from 650°C to 780°C to obtain a lithium-containing composite oxide represented by $LiNi_{0.88}Co_{0.09}Al_{0.03}O_2$.

The above positive electrode active material, acetylene black, and polyvinylidene fluoride were mixed at a mass ratio of 95:2.5:2.5, and N-methyl-2-pyrrolidone (NMP) as a dispersion medium was used to prepare a positive electrode mixture slurry. Then, the positive electrode mixture slurry was applied on a positive electrode core composed of aluminum foil, the coating film was dried and compressed, and then the positive electrode core was cut to a predetermined electrode size to obtain a positive electrode in which a positive electrode mixture layer was disposed on both surfaces of the positive electrode core. At a part of the positive electrode, an exposed portion where the surface of the positive electrode core was exposed was provided.

[Production of Silicon-Containing Material]

Coal pitch (manufactured by JFE Chemical Corporation, MCP250) as a carbon material and raw material silicon (3N, average particle diameter: 10 μm) were mixed at a mass ratio of 50:50, and this mixture was crushed to prepare fine particles with a planetary ball mill (manufactured by Fritsch Co., Ltd., P-5). Then, the powdery fine particle mixture was calcined in an inert atmosphere to carbonize the carbon source, and a calcined product in which a silicon phase is dispersed in an amorphous carbon phase was obtained. Thereafter, the calcined product was crushed by using a jet mill to obtain silicon-containing particles having an average particle diameter of 10 μm.

Then, powders of lithium methanesulfonate (MSL) and polyvinylidene fluoride (PVDF) were added into the silicon-containing particles, a dry-mixing treatment was performed, and MSL and PVDF were adhered to surfaces of the silicon-containing particles to produce an intermediate. In this time, the mixing was performed so that the amounts were 4 parts by mass of MSL and 2 parts by mass of PVDF relative to 100 parts by mass of the silicon-containing particles. Then, the obtained intermediate was subjected to a thermal treatment in an inert atmosphere at 250°C for 2 hours, and PVDF adhering to the surfaces of the silicon-containing particles was liquefied to produce a silicon-containing material having a coating layer on the surfaces of the silicon-containing particles.

[Production of Negative Electrode]

Graphite and the above silicon-containing material were mixed at a mass ratio of 90: 10, and this mixture was used as a negative electrode active material. Then, 100 parts by mass of the negative electrode active material, 1 part by mass of styrene butadiene rubber (SBR), and 1 part by mass of carboxymethylcellulose (CMC) were mixed, and an appropriate amount of water was added to prepare a negative electrode mixture slurry.

Then, a part of the produced negative electrode mixture layer slurry was applied on both surfaces of a negative electrode core composed of copper film, and the coating film was dried and compressed to form a second negative electrode mixture layer. Further, the remained negative electrode mixture slurry was applied on the second negative electrode mixture layer, and the coating film was dried and compressed at a linear pressure different from that in forming the second negative electrode mixture layer to form a first negative electrode mixture layer. In this time, an applying mass ratio between the slurry used for the first negative electrode mixture layer and the slurry used for the second negative electrode mixture layer was 50:50. The produced negative electrode had a bilayer structure including an underlayer (the second negative electrode mixture layer) and an upper layer (the first negative electrode mixture layer) on both the surfaces of the negative electrode core, and a thickness of the negative electrode mixture layer was 100 μm on one side. A value of T1/(T1+T2), calculated from a thickness (T1) of the first negative electrode mixture layer and a thickness (T2) of the second negative electrode mixture layer, was 0.5. At a part of the negative electrode, an exposed portion where the surface of the negative electrode core was exposed was provided.

A porosity and a tortuosity of the produced negative electrode mixture layer were measured by the above method. The porosity (ε1) of the first negative electrode mixture layer was 30%, the porosity (ε2) of the second negative electrode mixture layer was 20%, and the ratio of the porosities (ε1/ε2) was 1.5. The tortuosity (τ1) of the first negative electrode mixture layer was 2.0, the tortuosity (τ2) of the second negative electrode mixture layer was 3.0, and the ratio of the tortuosities (τ1/τ2) was 0.7.

[Preparation of Non-Aqueous Electrolyte (Electrolyte Liquid)]

Into a mixed solvent in which ethylene carbonate (EC), ethyl methyl carbonate (EMC), and dimethyl carbonate (DMC) were mixed at a volume ratio (25°C) of 3:3:4, $LiPF_6$ was dissolved at a concentration of 1.2 mol/L to prepare a non-aqueous electrolyte.

[Production of Test Cell (Non-Aqueous Electrolyte Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin to produce a wound electrode assembly. An insulating plate was disposed on each of the upper and lower sides of the electrode assembly, and the electrode assembly was housed in an exterior housing can. The negative electrode lead was welded to a bottom of the bottomed cylindrical exterior housing can, and the positive electrode lead was welded to a sealing assembly. The electrolyte liquid was injected into the exterior housing can, an opening portion of the exterior housing can was sealed with the sealing assembly via a gasket to produce a non-aqueous electrolyte secondary battery as a test cell.

[Evaluation of Initial Discharge Capacity and Charge-Discharge Cycle Characteristics]

Under a temperature environment at 25°C, the test cell was charged at a constant current of 0.3 C until a battery voltage reached 4.2 V, and then charged at a constant voltage of 4.2 V until a current value reached 0.02 C. Thereafter, the test cell was discharged at a constant current of 0.5 C until the battery voltage reached 2.5 V, and a discharge capacity at this time was specified as an initial discharge capacity. These charge and discharge were specified as one cycle, and 100 cycles were performed, and the initial discharge capacity and the discharge capacity at the 100th cycle were determined to calculate a capacity retention by the following formula.

Capacity retention R (%) = Discharge capacity at 100th cycle / Initial discharge capacity × 100

By using the obtained capacity retention R, a cycle deterioration rate was determined by the following formula. R0 in the formula is the capacity retention of the battery of Comparative Example 1. A smaller cycle deterioration rate means more excellent charge-discharge cycle characteristics.

$$\text{Cycle deterioration rate (\%)} = \{(100\text{-}R)/(100\text{-}R0)\} \times 100$$

<Example 2>

A test cell was produced and evaluated in the same manner as in Example 1 except that, in the production of the silicon-containing material, the mixing was performed so that the amounts were 2 parts by mass of MSL and 2 parts by mass of PVDF relative to 100 parts by mass of the silicon-containing particles.

<Example 3>

A test cell was produced and evaluated in the same manner as in Example 1 except that, in the production of the negative electrode, single-wall carbon nanotube (CNT) was mixed as the conductive agent. In more detail, in the production of the negative electrode, 100 parts by mass of the negative electrode active material, 0.02 parts by mass of CNT, 1 part by mass of SBR, and 1 part by mass of CMC were mixed.

<Example 4>

A test cell was produced and evaluated in the same manner as in Example 3 except that, in the production of the silicon-containing material, the mixing was performed so that the amounts were 2 parts by mass of MSL and 2 parts by mass of PVDF relative to 100 parts by mass of the silicon-containing particles.

<Example 5>

A test cell was produced and evaluated in the same manner as in Example 4 except that, in the production of the negative electrode, the linear pressures in compressing the first negative electrode mixture layer and the second negative electrode mixture layer were changed to produce the first negative electrode mixture layer and the second negative electrode mixture layer so that the porosity ($\varepsilon1$) of the first negative electrode mixture layer was 36%, the porosity ($\varepsilon2$) of the second negative electrode mixture layer was 18%, the tortuosity ($\tau1$) of the first negative electrode mixture layer on the surface side was 1.2, and the tortuosity ($\tau2$) of the second negative electrode mixture layer on the core side was 4.0. Specifically, the ratio of the porosities ($\varepsilon1/\varepsilon2$) of the negative electrode mixture layer in Example 5 was 2.0, and the ratio of the tortuosities ($\tau1/\tau2$) was 0.3. Note that the entire thickness of the negative electrode mixture layer was the same as in

Example 4.

<Example 6>

A test cell was produced and evaluated in the same manner as in Example 4 except that, in the production of the negative electrode, the linear pressures in compressing the first negative electrode mixture layer and the second negative electrode mixture layer were changed to produce the first negative electrode mixture layer and the second negative electrode mixture layer so that the porosity (ε1) of the first negative electrode mixture layer was 34%, the porosity (ε2) of the second negative electrode mixture layer was 20%, the tortuosity (τ1) of the first negative electrode mixture layer on the surface side was 1.5, and the tortuosity (τ2) of the second negative electrode mixture layer on the core side was 3.0. Specifically, the ratio of the porosities (ε1/ε2) of the negative electrode mixture layer in Example 5 was 1.7, and the ratio of the tortuosities (τ1/τ2) was 0.5. Note that the entire thickness of the negative electrode mixture layer was the same as in Example 4.

<Example 7>

In the production of the negative electrode, the graphite and the silicon-containing material were mixed at a mass ratio of 88:12, and this mixture was used as a first negative electrode active material. The graphite and the silicon-containing material were mixed at a mass ratio of 92:8, and this mixture was used as a second negative electrode active material. Then, 100 parts by mass of the first negative electrode active material, 0.02 parts by mass of CNT, 1 part by mass of SBR, and 1 part by mass of CMC were mixed, and an appropriate amount of water was added to prepare a first negative electrode mixture slurry. In addition, 100 parts by mass of the second negative electrode active material, 0.02 parts by mass of CNT, 1 part by mass of SBR, and 1 part by mass of CMC were mixed, and an appropriate amount of water was added to prepare a second negative electrode mixture slurry.

Then, the second negative electrode mixture slurry was applied on both surfaces of a negative electrode core composed of copper foil, and the coating film was dried and compressed to form a second negative electrode mixture layer. Further, the first negative electrode mixture slurry was applied on the second negative electrode mixture layer, and the coating film was dried and compressed at a linear pressure different from that in forming the second negative electrode mixture layer to form a first negative electrode mixture layer. In this time, an applying mass ratio between the first negative electrode mixture slurry and the second negative electrode mixture slurry per unit area was 50:50. This procedure produced a negative electrode mixture layer in which a content rate (θ1) of the silicon-containing material in the first negative electrode mixture layer was 12% by mass, a content rate (θ2) of the silicon-containing material in the second negative electrode mixture layer was 8% by mass, and θ1/θ2 was 1.5. Note that the entire thickness of the negative electrode mixture layer was the same as in Example 4. A test cell was produced and evaluated in the same manner as in Example 4 except for the above.

<Example 8>

In the production of the negative electrode, the graphite and the silicon-containing material were mixed at a mass ratio of 85:15, and this mixture was used as a first negative electrode active material. The graphite and the silicon-containing material were mixed at a mass ratio of 95:5, and this mixture was used as a second negative electrode active material. A test cell was produced and evaluated in the same manner as in Example 7 except for the above. Specifically, in the negative electrode of Example 8, a content rate (θ1) of the silicon-containing material in the first negative electrode mixture layer was 15% by mass, a content rate (θ2) of the silicon-containing material in the second negative electrode mixture layer was 5% by mass, and θ1/θ2 was 3.0.

<Example 9>

A test cell was produced and evaluated in the same manner as in Example 4 except that, in the production of the negative electrode, the applying mass ratio between the slurry used for the first negative electrode mixture layer and the slurry used for the second negative electrode mixture layer was changed so that a thickness (T1) of the first negative electrode mixture layer was 10 μm, and a thickness (T2) of the second negative electrode mixture layer was 90 μm. Specifically, a value of T1/(T1+T2), calculated from T1 and T2, was 0.1. In the negative electrode mixture layer of Example 9, the porosity (ε1) of the first negative electrode mixture layer was 34%, the porosity (ε2) of the second negative electrode mixture layer on the core side was 26%, and the ratio of the porosities (ε1/ε2) was 1.3. The tortuosity (τ1) of the first negative electrode mixture layer on the surface side was 2.0, the tortuosity (τ2) of the second negative electrode mixture layer on the core side was 3.0, and the ratio of the tortuosities (τ1/τ2) was 0.7.

<Example 10>

A test cell was produced and evaluated in the same manner as in Example 4 except that, in the production of the negative electrode, the applying mass ratio between the slurry used for the first negative electrode mixture layer and the slurry used for the second negative electrode mixture layer was changed so that a thickness (T1) of the first negative electrode mixture layer was 30 $\mu$m, and a thickness (T2) of the second negative electrode mixture layer was 70 $\mu$m. Specifically, a value of T1/(T1+T2), calculated from T1 and T2, was 0.3. In the negative electrode mixture layer of Example 10, the porosity ($\varepsilon$1) of the first negative electrode mixture layer was 32%, the porosity ($\varepsilon$2) of the second negative electrode mixture layer on the core side was 23%, and the ratio of the porosities ($\varepsilon$1/$\varepsilon$2) was 1.4. The tortuosity ($\tau$1) of the first negative electrode mixture layer on the surface side was 3.0, the tortuosity ($\tau$2) of the second negative electrode mixture layer on the core side was 3.0, and the ratio of the tortuosities ($\tau$1/$\tau$2) was 0.7.

<Example 11>

A test cell was produced and evaluated in the same manner as in Example 4 except that, in the production of the negative electrode, the applying mass ratio between the slurry used for the first negative electrode mixture layer and the slurry used for the second negative electrode mixture layer was changed so that a thickness (T1) of the first negative electrode mixture layer was 75 $\mu$m, and a thickness (T2) of the second negative electrode mixture layer was 25 $\mu$m. Specifically, a value of T1/(T1+T2), calculated from T1 and T2, was 0.75. In the negative electrode mixture layer of Example 11, the porosity ($\varepsilon$1) of the first negative electrode mixture layer was 27%, the porosity ($\varepsilon$2) of the second negative electrode mixture layer on the core side was 18%, and the ratio of the porosities ($\varepsilon$1/$\varepsilon$2) was 1.5. The tortuosity ($\tau$1) of the first negative electrode mixture layer on the surface side was 2.0, the tortuosity ($\tau$2) of the second negative electrode mixture layer on the core side was 3.0, and the ratio of the tortuosities ($\tau$1/$\tau$2) was 0.7.

<Example 12>

In the production of the negative electrode, 100 parts by mass of the negative electrode active material, 0.03 parts by mass of CNT, 1 part by mass of SBR, and 1 part by mass of CMC were mixed, and an appropriate amount of water was added to prepare a first negative electrode mixture slurry. In addition, 100 parts by mass of the negative electrode active material, 0.01 part by mass of CNT, 1 part by mass of SBR, and 1 part by mass of CMC were mixed, and an appropriate amount of water was added to prepare a second negative electrode mixture slurry.

Then, the second negative electrode mixture slurry was applied on both surfaces of a negative electrode core composed of copper foil, and the coating film was dried and compressed to form a second negative electrode mixture layer. Further, the first negative electrode mixture slurry was applied on the second negative electrode mixture layer, and the coating film was dried and compressed at a linear pressure different from that in forming the second negative electrode mixture layer to form a first negative electrode mixture layer. In this time, an applying mass ratio between the first negative electrode mixture slurry and the second negative electrode mixture slurry per unit area was 50:50. This procedure produced a negative electrode mixture layer in which a content rate ($\phi$1) of CNT in the first negative electrode mixture layer was 0.03% by mass, a content rate ($\phi$2) of CNT in the second negative electrode mixture layer was 0.01% by mass, and $\phi$1/$\phi$2 was 3.0. Note that the entire thickness of the negative electrode mixture layer was the same as in Example 4. A test cell was produced and evaluated in the same manner as in Example 4 except for the above.

<Example 13>

In the production of the negative electrode, 100 parts by mass of the negative electrode active material, 0.05 parts by mass of CNT, 1 part by mass of SBR, and 1 part by mass of CMC were mixed, and an appropriate amount of water was added to prepare a first negative electrode mixture slurry. In addition, 100 parts by mass of the negative electrode active material, 0.01 part by mass of CNT, 1 part by mass of SBR, and 1 part by mass of CMC were mixed, and an appropriate amount of water was added to prepare a second negative electrode mixture slurry. A test cell was produced and evaluated in the same manner as in Example 12 except for the above. Specifically, in the negative electrode of Example 13, a content rate ($\phi$1) of CNT in the first negative electrode mixture layer was 0.05% by mass, a content rate ($\phi$2) of CNT in the second negative electrode mixture layer was 0.01% by mass, and $\phi$1/$\phi$2 was 5.0.

<Example 14>

In the production of the negative electrode, 100 parts by mass of the negative electrode active material, 0.08 parts by mass of CNT, 1 part by mass of SBR, and 1 part by mass of CMC were mixed, and an appropriate amount of water was added to prepare a first negative electrode mixture slurry. In addition, 100 parts by mass of the negative electrode active

material, 0.01 part by mass of CNT, 1 part by mass of SBR, and 1 part by mass of CMC were mixed, and an appropriate amount of water was added to prepare a second negative electrode mixture slurry. A test cell was produced and evaluated in the same manner as in Example 12 except for the above. Specifically, in the negative electrode of Example 14, a content rate ($\phi$1) of CNT in the first negative electrode mixture layer was 0.08% by mass, a content rate ($\phi$2) of CNT in the second negative electrode mixture layer was 0.01% by mass, and $\phi$1/$\phi$2 was 8.0.

<Example 15>

In the production of the negative electrode, the graphite and the silicon-containing material were mixed at a mass ratio of 88:12, and this mixture was used as a first negative electrode active material. The graphite and the silicon-containing material were mixed at a mass ratio of 92:8, and this mixture was used as a second negative electrode active material. Then, 100 parts by mass of the first negative electrode active material, 0.03 parts by mass of CNT, 1 part by mass of SBR, and 1 part by mass of CMC were mixed, and an appropriate amount of water was added to prepare a first negative electrode mixture slurry. In addition, 100 parts by mass of the second negative electrode active material, 0.01 part by mass of CNT, 1 part by mass of SBR, and 1 part by mass of CMC were mixed, and an appropriate amount of water was added to prepare a second negative electrode mixture slurry. A test cell was produced and evaluated in the same manner as in Example 12 except for the above. Specifically, in the negative electrode of Example 14, a content rate ($\theta$1) of the silicon-containing material in the first negative electrode mixture layer was 12% by mass, a content rate ($\theta$2) of the silicon-containing material in the second negative electrode mixture layer was 8% by mass, and $\theta$1/$\theta$2 was 1.5. In the negative electrode of Example 14, a content rate ($\phi$1) of CNT in the first negative electrode mixture layer was 0.08% by mass, a content rate ($\phi$2) of CNT in the second negative electrode mixture layer was 0.01% by mass, and $\phi$1/$\phi$2 was 8.0.

<Comparative Example 1>

A test cell was produced and evaluated in the same manner as in Example 1 except that: in the production of the silicon-containing material, MSL and PVDF were not mixed; and in the production of the negative electrode, the negative electrode mixture layer had a single-layered structure. Specifically, the silicon-containing material of Comparative Example 1 had no coating layer. A thickness of the negative electrode mixture of Comparative Example 1 was 100 $\mu$m, the porosity was 20%, and the tortuosity was 4.0.

<Comparative Example 2>

A test cell was produced and evaluated in the same manner as in Example 1 except that, in the production of the silicon-containing material, MSL and PVDF were not mixed.

<Comparative Example 3>

A test cell was produced and evaluated in the same manner as in Example 2 except that, in the production of the negative electrode, the negative electrode mixture layer had a single-layered structure. The porosity of the negative electrode mixture of Comparative Example 3 was 20%, and the tortuosity was 4.0.

<Comparative Example 4>

A test cell was produced and evaluated in the same manner as in Example 4 except that, in the production of the negative electrode, the negative electrode mixture layer had a single-layered structure. The porosity of the negative electrode mixture of Comparative Example 4 was 20%, and the tortuosity was 4.0.

<Comparative Example 5>

A test cell was produced and evaluated in the same manner as in Example 7 except that, in the production of the silicon-containing material, MSL and PVDF were not mixed.

<Comparative Example 6>

A test cell was produced and evaluated in the same manner as in Example 8 except that, in the production of the silicon-containing material, MSL and PVDF were not mixed.

Table 1 shows the evaluation results of the test cells of Examples 1 to 15 and Comparative Examples 1 to 6. In Table 1, the initial discharge capacity and the cycle deterioration rate of the test cells of Examples 1 to 15 and Comparative

Examples 2 to 6 were values relative to the initial discharge capacity of the test cell of Comparative Example 1 being 100. A larger value of the initial discharge capacity means more excellent initial discharge capacity, and a smaller value of the cycle deterioration rate means more excellent cycle characteristics.

[Table 1]

| | Negative electrode | | | | | | | | | | | | Evaluation results | |
|---|---|---|---|---|---|---|---|---|---|---|---|---|---|---|
| | Coating layer | | Layer structure | Silicon content rate | | | CNT content rate | | | Thickness ratio (T1 /(T1+T2)) | Ratio of Porosities (ε1/ε2) | Ratio of tortuosities (τ1/τ2) | Initial discharge capacity (relative value) | Cycle deterioration rate (relative value) |
| | MSL addition amount [% by mass] | PVDF addition Amount [by mass] | | θ1 [% by mass | θ2 [% by mass | θ1/θ2 | φ1 [% by mass] | φ2 [% by mass] | φ1/φ2 /φ2 | | | | | |
| Example 1 | 4 | 2 | Bilayer | 10 | 10 | 1.0 | - | - | - | 0.5 | 1.5 | 0.7 | 100.8 | 97.6 |
| Example 2 | 2 | 2 | Bilaver | 10 | 10 | 1.0 | - | - | - | 0.5 | 1.5 | 0.7 | 103.1 | 97.8 |
| Example 3 | 4 | 2 | Bilaver | 10 | 10 | 1.0 | 0.02 | 0.02 | 1.0 | 0.5 | 1.5 | 0.7 | 101.1 | 94.8 |
| Example 4 | 2 | 2 | Bilayer | 10 | 10 | 1.0 | 0.02 | 0.02 | 1.0 | 0.5 | 1.5 | 0.7 | 103.3 | 95.0 |
| Example 5 | 2 | 2 | Bilaver | 10 | 10 | 1.0 | 0.02 | 0.02 | 1.0 | 0.5 | 2.0 | 0.3 | 103.8 | 94.4 |
| Example 6 | 2 | 2 | Bilayer | 10 | 10 | 1.0 | 0.02 | 0.02 | 1.0 | 0.5 | 1.7 | 0.5 | 104.2 | 94.2 |
| Example 7 | 2 | 2 | Bilaver | 12 | 8 | 1.5 | 0.02 | 0.02 | 1.0 | 0.5 | 1.5 | 0.7 | 103.8 | 95.1 |
| Examples | 2 | 2 | Bilaver | 15 | 5 | 3.0 | 0.02 | 0.02 | 1.0 | 0.5 | 1.5 | 0.7 | 104.2 | 94.8 |
| Example 9 | 2 | 2 | Bilayer | 10 | 10 | 1.0 | 0.02 | 0.02 | 1.0 | 0.1 | 1.3 | 0.7 | 101.3 | 95.5 |
| Example 10 | 2 | 2 | Bilaver | 10 | 10 | 1.0 | 0.02 | 0.02 | 1.0 | 0.3 | 1.4 | 0.7 | 102.2 | 95.0 |
| Example 11 | 2 | 2 | Bilaver | 10 | 10 | 1.0 | 0.02 | 0.02 | 1.0 | 0.75 | 1.5 | 0.7 | 101.2 | 96.1 |
| Example 12 | 2 | 2 | Bilaver | 10 | 10 | 1.0 | 0.03 | 0.01 | 3.0 | 0.5 | 1.5 | 0.7 | 104.6 | 93.8 |
| Example 13 | 2 | 2 | Bilaver | 10 | 10 | 1.0 | 0.05 | 0.01 | 5.0 | 0.5 | 1.5 | 0.7 | 105.2 | 93.5 |
| Example 14 | 2 | 2 | Bilayer | 10 | 10 | 1.0 | 0.08 | 0.01 | 8.0 | 0.5 | 1.5 | 0.7 | 103.2 | 93.9 |
| Example 15 | 2 | 2 | Bilaver | 12 | 8 | 1.5 | 0.03 | 0.01 | 3.0 | 0.5 | 1.5 | 0.7 | 105.6 | 93.8 |
| Comparative Example 1 | - | - | Single layer | 10 | 10 | 1.0 | - | - | - | - | - | - | 100.0 | 100.0 |
| Comparative Example 2 | - | - | Bilayer | 10 | 10 | 1.0 | - | - | - | 0.5 | 1.5 | 0.7 | 100.4 | 98.4 |
| Comparative Example 3 | 2 | 2 | Single layer | 10 | 10 | 1.0 | - | - | - | - | - | - | 95.9 | 98.8 |
| Comparative Example 4 | 2 | 2 | Single laver | 10 | 10 | 1.0 | 0.02 | 0.02 | 1.0 | - | - | - | 96.1 | 96.3 |

(continued)

| | Negative electrode | | | | | | | | | | | | Evaluation results | |
|---|---|---|---|---|---|---|---|---|---|---|---|---|---|---|
| | Coating laver | | Layer structure | Silicon content rate | | | CNT content rate | | | Thickness ratio (T1 /(T1+T2)) | Ratio of Porosities (ε1/ε2) | Ratio of tortuosities (τ1/τ2) | Initial discharge capacity (relative value) | Cycle deterioration rate (relative value) |
| | MSL addition amount [% by mass] | PVDF addition Amount [by mass] | | θ1 [% by mass | θ2 [% by mass | θ1/θ2 | φ1 [% by mass] | φ2 [% by mass] | φ1/φ2 /φ2 | | | | | |
| Comparative Example 5 | - | - | Bilaver | 10 | 10 | 1.0 | 0.02 | 0.02 | 1.0 | 0.5 | 1.5 | 0.7 | 100.6 | 99.0 |
| Comparative Example 6 | - | - | Bilayer | 10 | 10 | 1.0 | 0.02 | 0.02 | 1.0 | 0.5 | 1.5 | 0.7 | 100.7 | 99.2 |

As shown in Table 1, all the test cells of Examples improved the initial discharge capacity and the charge-discharge cycle characteristics compared with the test cell of Comparative Example 1. Meanwhile, the test cells of Comparative Examples 3 and 4 in which the coating layer was provided on the surfaces of the silicon-containing particles of the negative electrode and in which the negative electrode had the single-layered structure improved the charge-discharge cycle characteristics but decreased the initial discharge capacity compared with the test cell of Comparative Example 1 in which the coating layer was not provided on the surfaces of the silicon-containing particles of the negative electrode. It is presumed that this is because conductivity of the silicon-containing particles is decreased by the coating layer. In contrast, the test cells of Examples 2 and 4 in which the coating layer was provided on the surfaces of the silicon-containing particles of the negative electrode and in which the negative electrode had the bilayer structure remarkably improved the initial discharge capacity compared with the test cells of Comparative Examples 3 and 4. It is presumed that this is because improvement of diffusibility of the non-aqueous electrolyte in the first negative electrode mixture layer achieves uniform distribution of the non-aqueous electrolyte in the negative electrode mixture layer to reduce resistance of the negative electrode.

The test cells of Examples 7 and 8 in which the content rate of the silicon-containing material in the first negative electrode mixture layer was set to be larger than the content rate of the silicon-containing material in the second negative electrode mixture layer improved the initial discharge capacity and the cycle characteristics compared with the test cell of Example 4 in which the content rate of the silicon-containing material in the first negative electrode mixture layer and the content rate of the silicon-containing material in the second negative electrode mixture layer were the same. In addition, the test cells of Examples 12 to 14 in which the content rate of CNT in the first negative electrode mixture layer was set to be larger than the content rate of the CNT in the second negative electrode mixture layer improved the initial discharge capacity and the cycle characteristics compared with the test cell of Example 4 in which the content rate of CNT in the first negative electrode mixture layer and the content rate of CNT in the second negative electrode mixture layer were the same.

The present disclosure will be further described with the following embodiments.

Constitution 1: A negative electrode for a non-aqueous electrolyte secondary battery, the negative electrode including: a negative electrode core; a first negative electrode mixture layer; and a second negative electrode mixture layer disposed between the first negative electrode mixture layer and the negative electrode core, wherein the first negative electrode mixture layer and the second negative electrode mixture layer contain a carbon material and a silicon-containing material as a negative electrode active material, the silicon-containing material has silicon-containing particles and a coating layer coating at least a part of surfaces of the silicon-containing particles, the coating layer includes a sulfonate compound and a hydrophobic polymer compound, and a porosity ($\varepsilon 1$) of the first negative electrode mixture layer and a porosity ($\varepsilon 2$) of the second negative electrode mixture layer satisfy $\varepsilon 1 > \varepsilon 2$.

Constitution 2: The negative electrode for a non-aqueous electrolyte secondary battery according to Constitution 1, wherein a tortuosity ($\tau 1$) of the first negative electrode mixture layer and a tortuosity ($\tau 2$) of the second negative electrode mixture layer satisfy $\tau 1 < \tau 2$.

Constitution 3: The negative electrode for a non-aqueous electrolyte secondary battery according to Constitution 1 or 2, wherein a tortuosity ($\tau 1$) of the first negative electrode mixture layer and a tortuosity ($\tau 2$) of the second negative electrode mixture layer satisfy $0.3 \leq \tau 1/\tau 2 < 1.0$.

Constitution 4: The negative electrode for a non-aqueous electrolyte secondary battery according to any one of Constitutions 1 to 3, wherein a content rate ($\theta 1$) of the silicon-containing material in the first negative electrode mixture layer and a content rate ($\theta 2$) of the silicon-containing material in the second negative electrode mixture layer satisfy $\theta 1 > \theta 2$.

Constitution 5: The negative electrode for a non-aqueous electrolyte secondary battery according to any one of Constitutions 1 to 3, wherein the first negative electrode mixture layer and the second negative electrode mixture layer include at least fibrous carbon as a conductive agent.

Constitution 6: The negative electrode for a non-aqueous electrolyte secondary battery according to Constitution 5, wherein a content rate ($\phi 1$) of the fibrous carbon in the first negative electrode mixture layer and a content rate ($\phi 2$) of the fibrous carbon in the second negative electrode mixture layer satisfy $1 \leq \phi 1/\phi 2 \leq 8$.

Constitution 7: The negative electrode for a non-aqueous electrolyte secondary battery according to any one of Constitutions 1 to 6, wherein a thickness (T1) of the first negative electrode mixture layer and a thickness (T2) of the second negative electrode mixture layer satisfy $0.1 \leq T1/(T1+T2) \leq 0.5$.

Constitution 8: The negative electrode for a non-aqueous electrolyte secondary battery according to any one of Constitutions 1 to 7, wherein the silicon-containing particles include an ion-conductive phase and a silicon phase dispersed in the ion-conductive phase.

Constitution 9: The negative electrode for a non-aqueous electrolyte secondary battery according to Constitution 8, wherein the ion-conductive phase is at least one selected from the group consisting of a silicate phase, a carbon phase, a silicide phase, and a silicon oxide phase.

Constitution 10: The negative electrode for a non-aqueous electrolyte secondary battery according to any one of Constitutions 1 to 9, wherein the sulfonate compound is a compound represented by a formula (I), wherein A is a group I or

group II element, R is a hydrocarbon group, and "n" is 1 or 2.

[Formula 2]

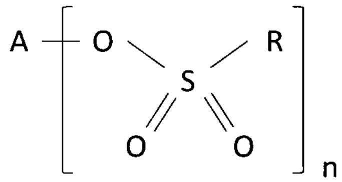

(I)

Constitution 11: The negative electrode for a non-aqueous electrolyte secondary battery according to Constitution 10, wherein the sulfonate compound includes at least one selected from the group consisting of lithium methanesulfonate, lithium ethanesulfonate, and lithium propanesulfonate.
Constitution 12: The negative electrode for a non-aqueous electrolyte secondary battery according to any one of Constitutions 1 to 11, wherein an amount of the sulfonate compound adhering to the surfaces of the silicon-containing particles is greater than or equal to 1% by mass relative to a total mass of the silicon-containing particles.
Constitution 13: The negative electrode for a non-aqueous electrolyte secondary battery according to any one of Constitutions 1 to 12, wherein the hydrophobic polymer compound includes a fluororesin.
Constitution 14: The negative electrode for a non-aqueous electrolyte secondary battery according to Constitution 13, wherein the fluororesin includes at least one selected from the group consisting of polyvinylidene fluoride, polytetrafluoroethylene, tetrafluoroethylene-perfluoroalkyl vinyl ether copolymer, tetrafluoroethylene-hexafluoropropylene copolymer, tetrafluoroethylene-ethylene copolymer, chlorotrifluoroethylene-ethylene copolymer, and polychlorotrifluoroethylene.
Constitution 15: The negative electrode for a non-aqueous electrolyte secondary battery according to any one of Constitutions 1 to 14, wherein an amount of the hydrophobic polymer compound adhering to the surfaces of the silicon-containing particles is greater than or equal to 1% by mass relative to a total mass of the silicon-containing particles.
Constitution 16: The negative electrode for a non-aqueous electrolyte secondary battery according to any one of Constitutions 1 to 15, wherein a peak derived from the sulfonate compound is observed on a surface layer portion of the coating layer in surface analysis by X-ray photoelectron spectrometry.
Constitution 17: The negative electrode for a non-aqueous electrolyte secondary battery according to any one of Constitutions 1 to 16, wherein the silicon-containing material further has a conductive layer including a conductive carbon material between the silicon-containing particles and the coating layer.
Constitution 18: A non-aqueous electrolyte secondary battery, comprising: the negative electrode for a non-aqueous electrolyte secondary battery according to any one of Constitutions 1 to 17; a positive electrode; and a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Negative electrode core, 31 First negative electrode mixture layer, 32 Second negative electrode mixture layer, 40 Silicon-containing material, 41 Silicon-containing particles, 42 Coating layer, 43 Ion-conductive phase, 44 Silicon phase

**Claims**

**1.** A negative electrode for a non-aqueous electrolyte secondary battery, the negative electrode including:

a negative electrode core;
a first negative electrode mixture layer; and
a second negative electrode mixture layer disposed between the first negative electrode mixture layer and the negative electrode core, wherein
the first negative electrode mixture layer and the second negative electrode mixture layer contain a carbon material and a silicon-containing material as a negative electrode active material,
the silicon-containing material has silicon-containing particles and a coating layer coating at least a part of surfaces of the silicon-containing particles,

the coating layer includes a sulfonate compound and a hydrophobic polymer compound, and
a porosity ($\varepsilon 1$) of the first negative electrode mixture layer and a porosity ($\varepsilon 2$) of the second negative electrode mixture layer satisfy $\varepsilon 1 > \varepsilon 2$.

**2.** The negative electrode for a non-aqueous electrolyte secondary battery according to claim 1, wherein a tortuosity ($\tau 1$) of the first negative electrode mixture layer and a tortuosity ($\tau 2$) of the second negative electrode mixture layer satisfy $\tau 1 < \tau 2$.

**3.** The negative electrode for a non-aqueous electrolyte secondary battery according to claim 1, wherein a tortuosity ($\tau 1$) of the first negative electrode mixture layer and a tortuosity ($\tau 2$) of the second negative electrode mixture layer satisfy $0.3 \leq \tau 1/\tau 2 < 1.0$.

**4.** The negative electrode for a non-aqueous electrolyte secondary battery according to claim 1, wherein a content rate ($\theta 1$) of the silicon-containing material in the first negative electrode mixture layer and a content rate ($\theta 2$) of the silicon-containing material in the second negative electrode mixture layer satisfy $\theta 1 > \theta 2$.

**5.** The negative electrode for a non-aqueous electrolyte secondary battery according to claim 1, wherein the first negative electrode mixture layer and the second negative electrode mixture layer include at least fibrous carbon as a conductive agent.

**6.** The negative electrode for a non-aqueous electrolyte secondary battery according to claim 5, wherein a content rate ($\phi 1$) of the fibrous carbon in the first negative electrode mixture layer and a content rate ($\Phi 2$) of the fibrous carbon in the second negative electrode mixture layer satisfy $1 \leq \phi 1/\phi 2 \leq 8$.

**7.** The negative electrode for a non-aqueous electrolyte secondary battery according to claim 1, wherein a thickness (T1) of the first negative electrode mixture layer and a thickness (T2) of the second negative electrode mixture layer satisfy $0.1 \leq T1/(T1+T2) \leq 0.5$.

**8.** The negative electrode for a non-aqueous electrolyte secondary battery according to claim 1, wherein the silicon-containing particles include an ion-conductive phase and a silicon phase dispersed in the ion-conductive phase.

**9.** The negative electrode for a non-aqueous electrolyte secondary battery according to claim 8, wherein the ion-conductive phase is at least one selected from the group consisting of a silicate phase, a carbon phase, a silicide phase, and a silicon oxide phase.

**10.** The negative electrode for a non-aqueous electrolyte secondary battery according to claim 1, wherein the sulfonate compound is a compound represented by a formula (I), wherein A is a group I or group II element, R is a hydrocarbon group, and "n" is 1 or 2.

[Formula 1]

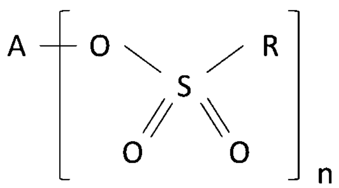

(I)

**11.** The negative electrode for a non-aqueous electrolyte secondary battery according to claim 10, wherein the sulfonate compound includes at least one selected from the group consisting of lithium methanesulfonate, lithium ethanesulfonate, and lithium propanesulfonate.

**12.** The negative electrode for a non-aqueous electrolyte secondary battery according to claim 1, wherein an amount of the sulfonate compound adhering to the surfaces of the silicon-containing particles is greater than or equal to 1% by mass relative to a total mass of the silicon-containing particles.

**13.** The negative electrode for a non-aqueous electrolyte secondary battery according to claim 1, wherein the hydrophobic polymer compound includes a fluororesin.

**14.** The negative electrode for a non-aqueous electrolyte secondary battery according to claim 13, wherein the fluororesin includes at least one selected from the group consisting of polyvinylidene fluoride, polytetrafluoroethylene, tetrafluoroethylene-perfluoroalkyl vinyl ether copolymer, tetrafluoroethylene-hexafluoropropylene copolymer, tetrafluoroethylene-ethylene copolymer, chlorotrifluoroethylene-ethylene copolymer, and polychlorotrifluoroethylene.

**15.** The negative electrode for a non-aqueous electrolyte secondary battery according to claim 1, wherein an amount of the hydrophobic polymer compound adhering to the surfaces of the silicon-containing particles is greater than or equal to 1% by mass relative to a total mass of the silicon-containing particles.

**16.** The negative electrode for a non-aqueous electrolyte secondary battery according to claim 1, wherein a peak derived from the sulfonate compound is observed on a surface layer portion of the coating layer in surface analysis by X-ray photoelectron spectrometry.

**17.** The negative electrode for a non-aqueous electrolyte secondary battery according to claim 1, wherein the silicon-containing material further has a conductive layer including a conductive carbon material between the silicon-containing particles and the coating layer.

**18.** A non-aqueous electrolyte secondary battery, comprising:

the negative electrode for a non-aqueous electrolyte secondary battery according to any one of claims 1 to 17;
a positive electrode; and
a non-aqueous electrolyte.

Figure 1

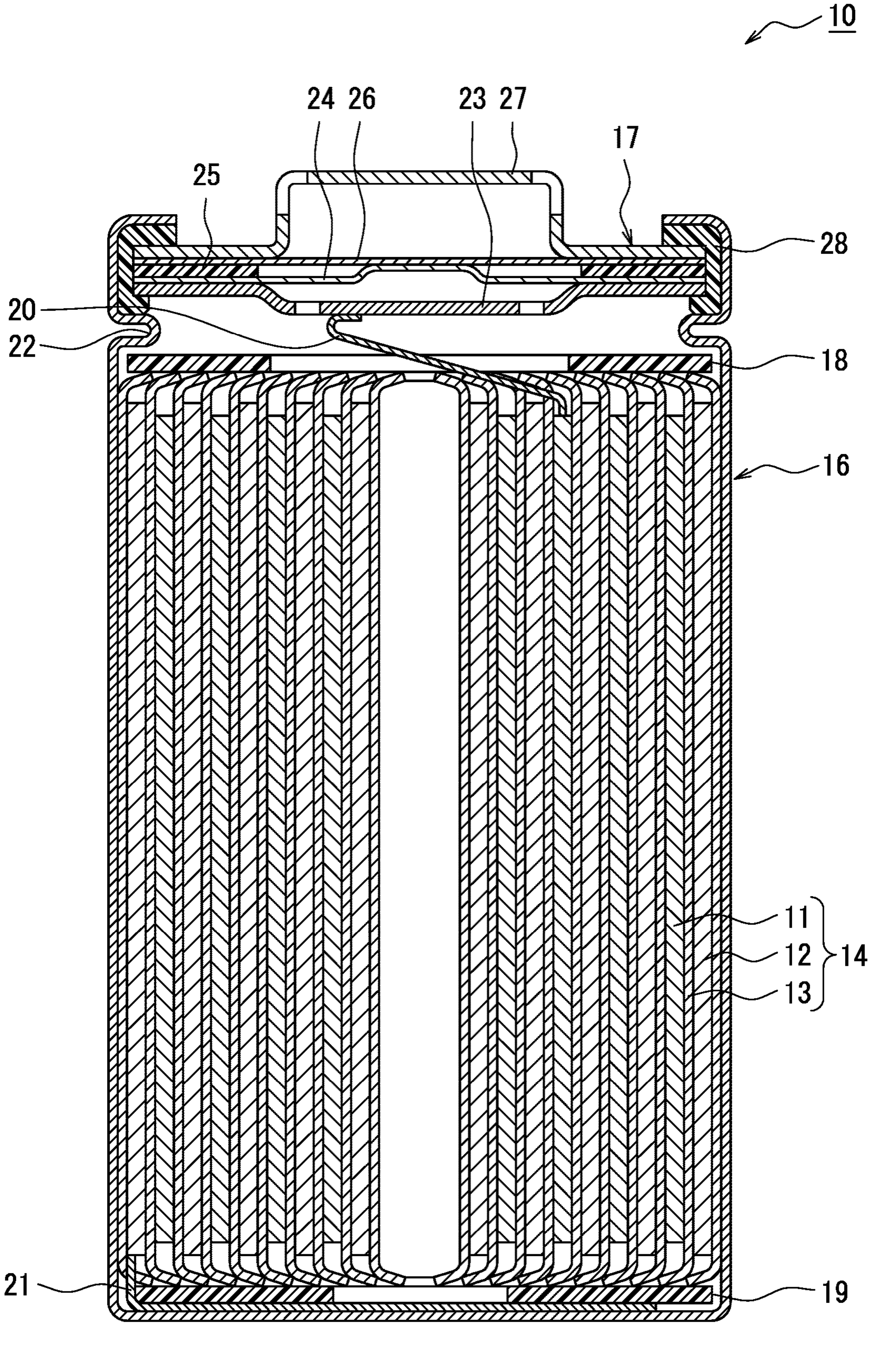

Figure 2

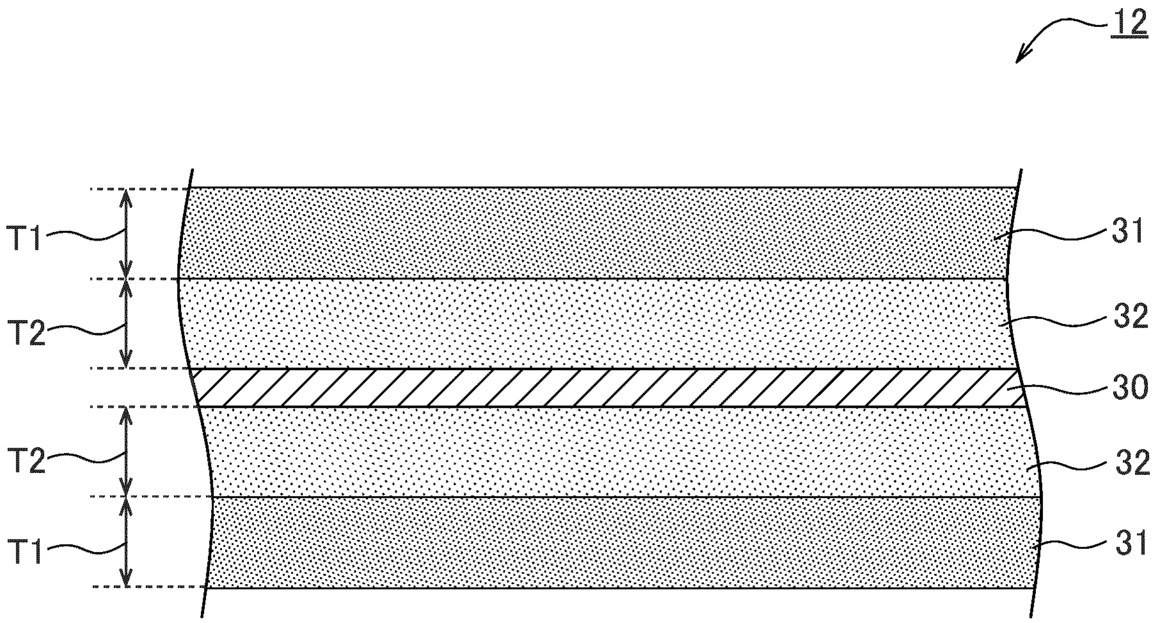

Figure 3

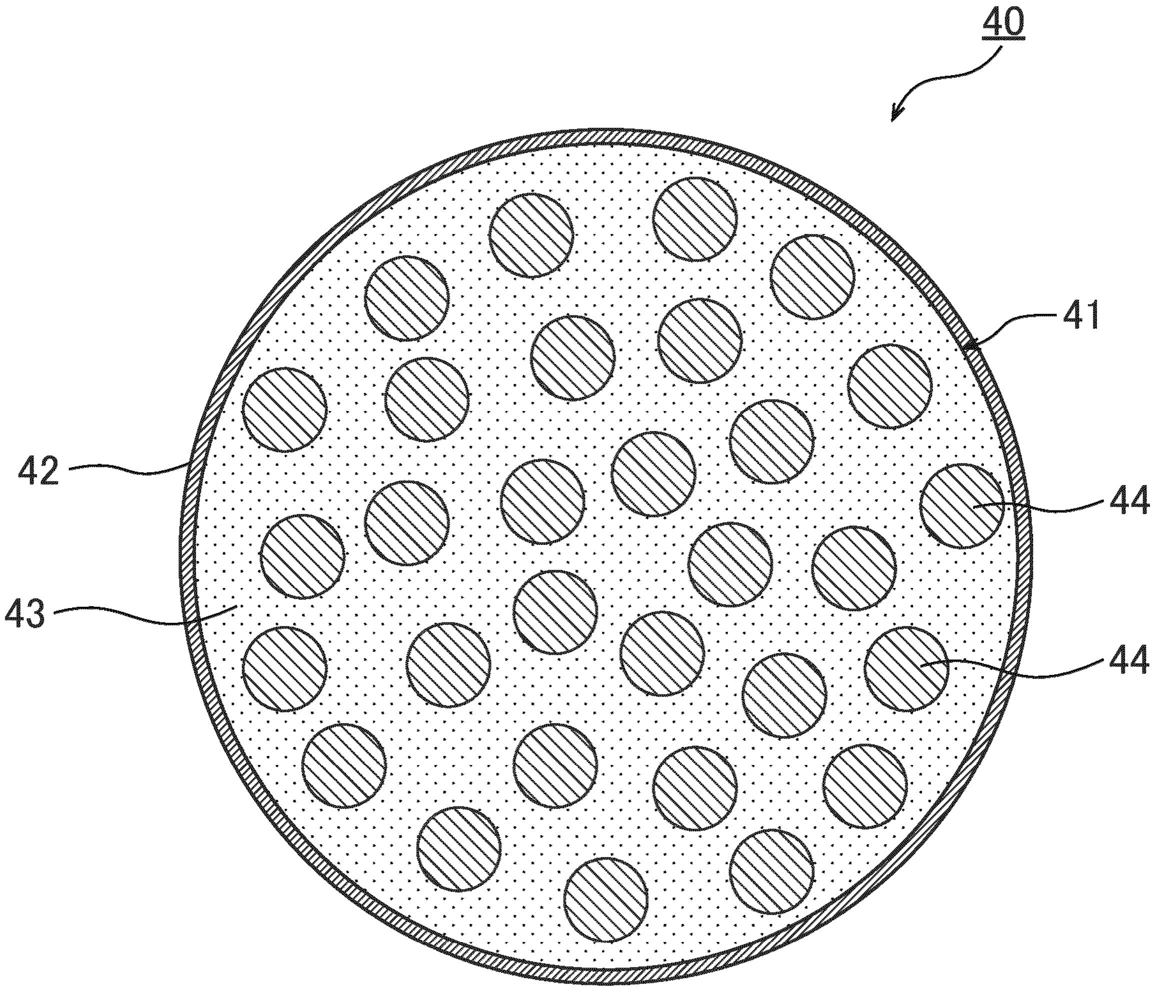

## INTERNATIONAL SEARCH REPORT

International application No.
**PCT/JP2024/011684**

### A. CLASSIFICATION OF SUBJECT MATTER

***H01M 4/134***(2010.01)i; ***H01M 4/133***(2010.01)i; ***H01M 4/36***(2006.01)i; ***H01M 4/38***(2006.01)i; ***H01M 4/587***(2010.01)i; ***H01M 4/62***(2006.01)i
FI: H01M4/134; H01M4/133; H01M4/36 B; H01M4/36 C; H01M4/36 E; H01M4/38 Z; H01M4/587; H01M4/62 Z

According to International Patent Classification (IPC) or to both national classification and IPC

### B. FIELDS SEARCHED

Minimum documentation searched (classification system followed by classification symbols)

H01M4/134; H01M4/133; H01M4/36; H01M4/38; H01M4/587; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/117550 A1 (PANASONIC INTELLECTUAL PROPERTY MANAGEMENT CO., LTD.) 17 June 2021 (2021-06-17)<br>entire text, all drawings | 1-18 |
| A | JP 2020-119811 A (TOYOTA JIDOSHA KABUSHIKI KAISHA) 06 August 2020 (2020-08-06)<br>entire text, all drawings | 1-18 |
| A | US 2020/0243848 A1 (LG CHEM, LTD.) 30 July 2020 (2020-07-30)<br>entire text, all drawings | 1-18 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/011684**

| Patent document cited in search report | Publication date (day/month/year) | Patent family member(s) | Publication date (day/month/year) |
|---|---|---|---|
| WO 2021/117550 A1 | 17 June 2021 | US 2023/0025305 A1<br>entire text, all drawings<br>EP 4075541 A1<br>CN 114830391 A | |
| JP 2020-119811 A | 06 August 2020 | (Family: none) | |
| US 2020/0243848 A1 | 30 July 2020 | WO 2019/108039 A2<br>EP 4152440 A1<br>KR 10-2019-0065172 A<br>CN 111213262 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019151016 A